# EUROPÄISCHE PATENTSCHRIFT

(11) **EP 1 970 875 B1**
(45) Veröffentlichungstag und Bekanntmachung des Hinweises auf die Patenterteilung: **15.12.2010**
(21) Anmeldenummer: 08102521.5
(22) Anmeldetag: 12.03.2008
(51) Int. Cl.: G08G 1/01

(54) **Verfahren und Vorrichtungen zur Generierung von Verkehrsinformationen und ihrer Lokalisierung innerhalb eines räumlichen Bereichs**
Method and devices for generating traffic information and locating it within a spatial area
Procédé et dispositifs de génération d'informations de trafic et leur localisation à l'intérieur d'une zone spatiale

(30) Priorität: 15.03.2007 DE 102007013220
(43) Veröffentlichungstag der Anmeldung: 17.09.2008
(73) Patentinhaber: Deutsche Telekom AG, 53113 Bonn (DE)
(72) Erfinder: Wörner, Andreas Dr., 65795 Hattersheim (DE)

(56) Entgegenhaltungen:
- EP-A- 1 742 190
- DE-A1- 19 638 798
- US-A- 5 465 289
- US-A1- 2006 223 529

## Beschreibung

Die Erfindung betrifft ein Verfahren zur Generierung von Verkehrsinformation und ihrer Lokalisierung innerhalb eines räumlichen Bereichs nach dem Oberbegriff des Anspruchs 1 sowie ein das Verfahren durchführendes System und eine Zentrale dafür nach dem Oberbegriff eines der nebengeordneten Ansprüche.

Üblicherweise werden Verkehrsinformationen über diverse Medien, wie z.B. Radio, Radio-Datendienst (RDS), Telefon, Internet, verbreitet. Häufig werden diese Information durch direkte Beobachtung von Verkehrsstörungen gewonnen. Als Datenquellen können hierzu z.B. menschliche Beobachter dienen, insbesondere Polizei oder sog. Staumelder, die eine Verkehrsstörung entdecken und sie per Funk oder Telefon an eine Zentrale melden. Auch technische Detektoren werden eingesetzt: Hierzu zählen stationären Sensoren (z.B. Induktionsschleifen, Infrarot- oder Radarsensoren), die an ihrem Standort lokale Verkehrsgrößen (z.B. Verkehrsflüsse, Geschwindigkeiten,...) messen, oder auch mobile Sensoren (sog. "Floating Cars"), die ein Geschwindigkeitsprofil entlang ihres Fahrweges ermitteln, wobei die Daten dann an eine Zentrale übertragen werden. In der Zentrale wird aus der Summe der Einzelbeobachtungen und deren zeitlichem Verlauf, und teils auch bloß aus einer Einzelbeobachtung, die jeweilige Lage, Länge und ggf. andere Eigenschaften der Verkehrsstörung ermittelt, als Verkehrsmeldung ausgedrückt und für individuelle Informationsdienste oder als kollektive Verkehrsinformation zur Verfügung gestellt. Auf diese und weitere bekannte Verfahren wird z.B. in dem Artikel "Stau-Schau" von P.-M. Ziegler und U. Fastenrath in der Zeitschrift "ct" Ausgabe 9/2005 auf Seiten 172 - 181 Bezug genommen. Zu den Eigenschaften dieser bekannten Verfahren bzw. Dienste zählen: Die Vollständigkeit, mit welcher die Verkehrsstörungen erfasst werden, die Lokalisierung der Störung, die Aktualität der Verkehrsinformationen und die Genauigkeit der Erfassung der Auswirkungen der Störungen, d.h. die Bestimmung von Länge und Verkehrszustand bei Verkehrsmeldungen, Verzögerungszeit bei Reisezeiten.

Auch wenn zahlreiche Verfahren zur Auswertung von Verkehrsdaten und zur Generierung von Verkehrsinformationen bekannt sind, so lässt aber zuweilen die Vollständigkeit der so gewonnen Information zu wünschen übrig.

In der DE 102 25 033 A1 wird ein Verfahren beschrieben, bei dem in einem Mobilfunksystem für jeweils einen Aufenthaltsbereich, der sog. Location Area, eine Auswertung von kollektiv erfassten Daten in Form von Location Updates erfolgt (s. dort u.a. Anspruch 1). Dazu werden konkrete Streckenabschnitte den Aufenthaltbereichen zugeordnet und anschließend werden die beim Location Update erfassten Daten mit Zeitmarken versehen. Somit erfolgt bereits am Anfang des Verfahrens eine Geo-Referenzierung, was wiederum erforderlich macht, dass entsprechend umfangreiche geografische Referenzdaten vorliegen müssen und was zudem einen erhöhten Rechenaufwand bedeutet. Wünschenswert wäre es, ein weniger aufwendiges Verfahren zu haben, bei dem außerdem möglichst auf den Zugriff auf geografische Referenzdaten verzichtet werden kann. Eine höhere räumliche Auflösung (Zellenebene) soll dort durch Erweiterung des Informationsumfangs der von allen Mobilfunkteilnehmern erfassten kollektiven Daten erreicht werden, was aber auch eine Erhöhung des Datenaufkommens bedeutet. Wünschenswert wäre es, eine höhere räumliche Auflösung ohne Erhöhung des Datenaufkommens zu erreichen.

In der DE 103 33 793 A1 wird ein Verfahren beschrieben, bei dem auf Funkzellen-Ebene individuelle Daten einzelner Mobilfunkgeräte ausgewertet werden, um Anzahl und/oder Geschwindigkeit der sich in den einzelnen Funkzellen bewegenden Mobilfunkgeräte zu ermitteln. Außerdem werden auch Anzahl der sich nicht bewegenden Mobilfunkgeräte ermittelt und mit den vorigen Daten verglichen, um eine Verkehrinformation zu generieren (s. dort u.a. Anspruch 1). Um für einen größeren Bereich, der mehrere Funkzellen umfasst oder gar für das gesamte Netz das Verfahren durchführen zu können, müssten demnach sehr viele Daten erhoben und ausgewertet werden. Zudem liefert das Verfahren in solchen Fällen, in denen alle Mobilfunkgeräte in einem Stau stehen und somit zumindest zeitweise unbeweglich sind, unsichere Ergebnisse. Das dortige Verfahren stützt sich alleine auf die individuellen Informationen, die nur mit deutlich geringerer Statistik vorliegen. Hieraus ergeben sich Probleme, Störungen zeitnah sicher zu erkennen und ihre Auswirkungen zu quantifizieren.

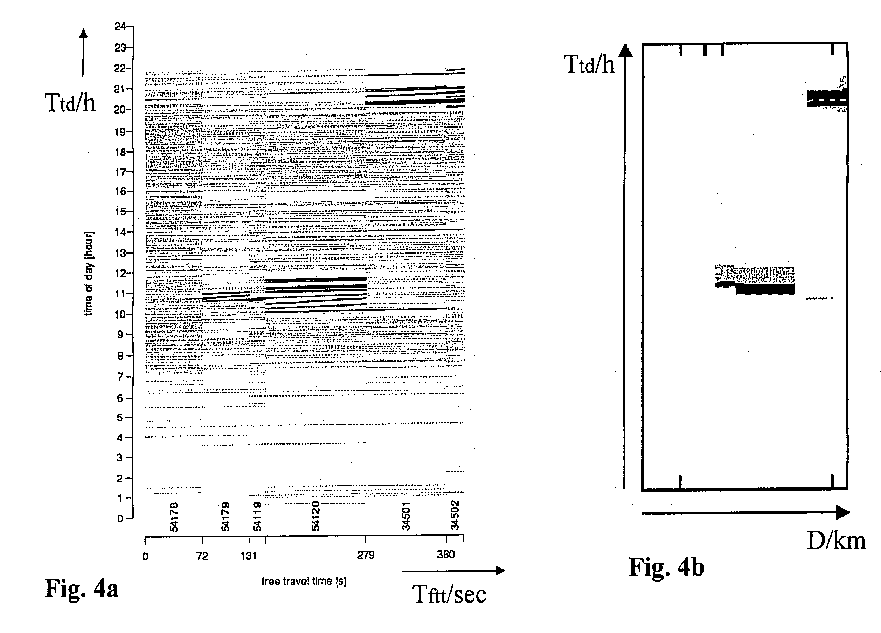

In der US 2006/02 23 529 A1 wird ein Verfahren beschrieben, bei dem anhand von "sector position information" und "road map information" (s. dort Fig. 4 und Abschnitt [0014]) ermittelt wird, ob die aktuelle Reisezeit eines Fahrzeugs, in dem ein Mobilfunkgerät betrieben wird, unterhalb einer Geschwindigkeitsbegrenzung liegt. Ist dies der Fall, so wird auf eine Verkehrsstörung, nämlich auf Stau, erkannt. Demnach wird das einzelne Fahrzeug bzw. Mobilfunkgerät als Stichprobe genommen, wodurch das Verfahren sehr unsicher wird. Zudem sind konkrete Kenntnisse bzw. Daten über die vor Ort gegebenen Verkehrsvorschriften (Geschwindigkeitsbegrenzung) erforderlich, was das Verfahren sehr aufwendig macht.

In der EP 17 42 190 A2 wird ein Verfahren beschrieben, bei dem für einen mehrere Funkzellen umfassenden Bereich die Daten erhoben und ausgewertet werden (s. dort u.a. Zusammenfassung). Hierzu wird beim Eintritt jeweils eines Mobilfunkgerätes in den Bereich die Identifikation der ersten Funkzelle dieses Bereiches erhoben und mit einem Zeitstempel versehen. Wenn dann beim Wechsel in einen nächsten Bereich werden dort auch die entsprechenden Daten erhoben werden, so kann aus dem Vergleich der Daten eine Reisezeit ermittelt werden. Allerdings wird auch hier bereits eine Geo-Referenzierung vorgenommen (s. dort Anspruch 1).

In der US 2003/00 69 683 A1 wird ein Verfahren beschrieben, bei dem zur Routenführung von Fahrzeugen, jeweils über einen bestimmten Zeitraum die Daten einzelner Fahrzeuge bzw. der darin befindlichen Mobilfunkgeräte gesammelt und ausgewertet werden, um das jeweilige Fahrzeug einem bestimmten Straßenabschnitt zuzuordnen (s. dort Abschnitt [0138]). Das geschieht dort, indem die aktuelle die Position und Geschwindigkeit des einzelnen Fahrzeuges anhand einer DatenAuswertung durch den Netzbetreiber und/oder durch Auswertung von GPS-Daten fortlaufend bestimmt werden (s. dort [0141]). Demnach ist auch dieses Verfahren recht aufwendig und erfordert zudem eine Geo-Referenzierung der erhobenen Daten.

In der DE 19638798 A1 wird ein weiteres systemgestütztes Verfahren zur Verkehrsdatenerfassung mittels Mobilfunknetzen vorgeschlagen. Dabei erfolgt zur Generierung von Verkehrsinformationen eine Auswertung der anwendungsspezifischen, groben Information über die jeweiligen Aufenthaltsorte von Mobiltelefonen, wie sie in jedem Mobilfunknetz vorliegt. Dieser Vorschlag scheint zwar das Problem der Vollständigkeit weitgehend zu lösen -werden doch hinreichend viele mobile Telefone auf allen Straßenklassen in Fahrzeugen bewegt- er bringt jedoch spezielle Probleme mit sich: So ist zunächst einmal zu klären, ob der jeweilige mobile Sensor, nämlich das einzelne Mobiltelefon, überhaupt valide Daten über den Individualverkehr liefert oder ggf. in einem Bus, mit dem Fahrrad, zu Fuß oder gar nicht bewegt wird. Gerade in den interessanten Situationen, d.h. bei niedrigen Fließgeschwindigkeiten in einem Stau, ist diese Unterscheidung naturgemäß enorm erschwert. Außerdem sind die Ortsinformationen, welche im Mobilfunknetz vorliegen, typischerweise mit Fehlern bzw. mit einer sehr groben Auflösung von mehreren hundert Metern behaftet, so dass die exakte Zuordnung von gemessenen Geschwindigkeiten zum Straßennetz, repräsentiert durch eine digitale Karte, insbesondere in dichten Netzen, insbesondere in städtischen Netzen, schwierig und oftmals unmöglich ist. So kann auch bei dieser Datenquelle ein eindeutiges Signal für gestörten Verkehr längere Zeit auf sich warten lassen, ggf. trotz einer vorhandenen Verkehrsstörung ausbleiben. Somit ergibt sich hier insbesondere die Fragestellung, wie Verkehrsinformationen erzeugt bzw. generiert werden können, die den umfangreichen Anforderungen an einen Verkehrsinformationsdienst, insbesondere der genaueren Lokalisierung bei gleichzeitig erzielter Vollständigkeit, Aktualität und genauer Erfassung der Störungsauswirkung usw. gerecht werden.

Es ist daher Aufgabe der vorliegenden Erfindung, ein Verfahren zur Generierung von Verkehrsinformation und ihrer Lokalisierung innerhalb eines räumlichen Bereichs sowie ein System und eine Zentrale dafür vorzustellen, die in vorteilhafter Weise die eingangs genannten Nachteile der herkömmlichen Lösungen überwinden.

Insbesondere soll ein Verfahren zur Generierung von Verkehrsinformation und ihrer Lokalisierung innerhalb eines räumlichen Bereichs eines zellulären Mobilfunksystems vorgeschlagen werden, in dem Mobilfunkgeräte eingebucht sind, wobei sich zumindest ein Teil der Mobilfunkgeräte in Fahrzeugen befindet, die sich durch den räumlichen Bereichs in mindestens einem Verkehrstrom entlang eines Verkehrsweges bewegen.

Um die obige Aufgabe zu erzielen, stellt die vorliegende Erfindung ein Verfahren vor, beim dem zur Generierung von Verkehrsinformation und ihrer Lokalisierung innerhalb eines räumlichen Bereichs die folgenden Schritte ausgeführt werden:
- mittels einer ersten Auswertung von kollektiven Daten, die Eintritte in den Bereich und Austritte aus dem Bereich von eingebuchten Mobilfunkgeräten anzeigen, wird für den mindestens einen Verkehrstrom eine kollektive Reisezeit durch den Bereich bestimmt;
- mittels einer zweiten Auswertung von individuellen Daten, die die Präsenz einzelner aktiver Mobilfunkgeräte in Unterbereichen des räumlichen Bereichs anzeigen, wird die kollektive Reisezeit auf die Unterbereiche des räumlichen Bereichs aufgeteilt, um für einzelne Unterbereiche davon eine dort vorherrschende Reisezeit zu ermitteln;
- mittels einer Abbildung der einzelnen Unterbereiche auf ein Straßenetz wird die Verkehrsinformation generiert und lokalisiert.

Somit erfolgt eine Kombination der kollektiven Daten, die mit hoher Rate von allen Mobilfunkgeräten erfasst werden, aber keine hohe räumliche Auflösung bieten, mit den individuellen Daten, die mit deutlich geringerer Rate nur von aktiven Mobilfunkgeräten erfasst werden, aber eine höhere räumliche Auflösung bieten. Dadurch können über netzseitig erfasste Mobilfunkdaten zeitnah Verkehrstörungen erkannt und ihre Auswirkungen quantifiziert sowie lokalisiert werden.

Ebenso werden ein System und eine Zentrale dafür vorgeschlagen, die Rechenmittel aufweisen, welche das Verfahren anhand der kollektiv und individuell erfassten Mobilfunkdaten durchführen.

Vorteilhafte Ausgestaltungen der Erfindung ergeben sich aus den Unteransprüchen.

Demnach entspricht der räumliche Bereich vorzugsweise einem Funkversorgungsbereich bzw. Aufenthaltsbereich des zellulären Mobilfunksystems und die Unterbereiche stellen einzelne oder mehrere Funkzellen des Funkversorgungsbereiches dar. Dabei wird mittels einer Überwachung der kollektiven Reisezeit ein Anstieg der Reisezeit als Verkehrsstörung in dem Bereich erkannt und vorzugsweise wird die erkannte Verkehrsstörung mittels Vergleich der Reisezeit mit einem vorgebaren Schwellwert und/oder einer vorgebbaren Zeitdauer quantifiziert.

Bevorzugt wird die kollektiven Daten mittels einer, insbesondere statistischen, Auswertung von Eintritts- und Austrittszeitpunkten bestimmt, die den Eintritt in den Bereich bzw. den Austritt aus dem Bereich der aktiven und nicht-aktiven Mobilfunkgeräte anzeigen. In diesem Zusammenhang werden vorzugsweise die kollektiven Daten mittels einer Auswertung von Aktualisierungsdaten für den Funkversorgungsbereich bezüglich des Eintritts- und Austritts der aktiven und nicht-aktiven Mobilfunkgeräte ermittelt. Ebenfalls werden die individuellen Daten mittels einer, insbesondere statistischen, Auswertung von Eintritts- und Austrittszeitpunkten bestimmt, die den Eintritt in den Unterbereich bzw. den Austritt aus dem Unterbereich der aktiven Mobilfunkgeräte anzeigen. In diesem Zusammenhang können vorzugsweise die individuellen Daten mittels einer Auswertung von Daten für einen Funkwechsel zwischen den Funkzellen bezüglich des Eintritts- und/oder Austritts der aktiven Mobilfunkgeräte ermittelt werden.

Auch wird vorzugsweise aus den individuellen Daten für den mindestens einen Unterbereich, insbesondere für die mindestens eine Funkzelle, eine individuelle Reisezeit bzw. eine Funkzellen-Reisezeit ermittelt wird. Dabei werden die individuellen Daten mit den kollektiven Daten verknüpft, indem die kollektive Reisezeit aufgeteilt und in Teilen auf die einzelnen Unterbereiche des Bereichs abgebildet wird, um mit aus den individuellen Daten ermittelten individuellen Reisezeiten bzw. Funkzellen-Reisezeiten verglichen zu werden. In diesem Zusammenhang werden zur Lokalisierung der erkannten Verkehrstörung bevorzugt nur die individuellen Daten derjenigen Mobilfunkgeräte herangezogen, deren individuelle Reisezeit zu der kollektiven Reisezeit passt.
Vorzugsweise wird durch Auswertung der kollektiven und individuellen Daten für den mindestens einen Verkehrstrom innerhalb des Bereichs eine Zuordnung, insbesondere eine Abfolge, von Unterbereichen bestimmt, die einem Verlauf des Verkehrsweges entsprechen. Dabei kann die Zuordnung bzw. Abfolge von Unterbereichen ohne eine geografische Zuweisung der Unterbereiche zu einer Landkarte lediglich anhand der statistischen Auswertung der kollektiven und individuellen Daten erfolgen.

Weiterhin kann die Auswertung der individuellen Daten durch zusätzliche Daten aus einer stationären Verkehrsbeobachtung ergänzt werden. Auch kann die Auswertung der individuellen Daten durch zusätzliche Daten oder Angaben über die Sende- und/oder Empfangsstärke von Mobilfunksignalen ergänzt werden.

Erfindungsgemäß erfolgt also eine Auswertung und Kombination bzw. Verknüpfung von kollektiv und individuell erfassten Mobilfunkdaten bzw. -signalen, indem eine erste Auswertung von kollektiv erfassten Signalen erfolgt, die die Präsenz von Sensoren in dem räumlichen Bereich anzeigen, wobei sich zumindest ein Teil der Sensoren in Fahrzeugen befindet, um kollektive Verkehrsinformationen in Form von kollektiven Daten zu ermittelen, die mindestens einem in dem Bereich vorliegenden Verkehrsstrom von Fahrzeugen zuordenbar sind; indem dann eine zweite Auswertung von individuell erfassten Signalen erfolgt, die jeweils die Präsenz eines einzelnen Sensors in einem lokalisierbaren Unterbereich des räumlichen Bereichs anzeigen, um individuelle Verkehrsinformationen in Form von individuellen Daten zu ermitteln, die jeweils einem einzelnen Fahrzeug zuordenbar sind; und indem dann mittels einer Kombination der kollektiven Daten und der individuellen Daten solche Verkehrsinformationen generiert werden, die sich auf den zumindest einen Verkehrsstrom beziehen.

Unter "Sensor" wird hier sehr allgemein jede Art von Sensorik bzw. Datenquellle verstanden, die Informationen bzw. Daten liefern, welche als Datenbasis für eine Analyse der Verkehrssituation dienen können. Hierunter werden insbesondere, aber nicht ausschließlich, mobile Sensoren in Gestalt von Mobiltelefonen bzw. Handies verstanden, die sich in dem beobachteten Bereich (im passiven oder aktiven Betriebszustand) befinden und Signale abgeben, insbesondere beim sog. Location Update und/oder beim Handover, aus denen auf ihre Präsenz und ggfs. Mobilität in dem Bereich geschlossen werden kann.

Unter "Verkehrsinformation" bzw. "Auswertung" wird hier sehr allgemein jede Art von Daten bzw. Datenerhebung verstanden, die durch kollektive bzw. individuelle Signalerfassung erfolgt, insbesondere durch Erfassung der genannten Signale, und die für eine Analyse der Verkehrssituation dienen können. In diesem Sinne kann auch von einer ersten Erhebung von kollektiv erfassten Daten bzw. einer zweiten Erhebung von individuell erfassten Daten gesprochen werden. Die genannte Kombination bezieht sich dann auf diese beiden Daten. Anzumerken ist, dass jeder der genannten Schritte auch für sich genommen durchgeführt werden kann, d.h. ohne anschließende Kombination der kollektiv erfassten Daten und der individuell erfassten Daten. Insbesondere aber die Kombination der beiden Daten führt zu den noch genauer beschriebenen Vorteilen.

Somit wird besonders die Kombination der beiden Daten / Datenarten bzw. Auswertungen vorgeschlagen, die sich zum einen auf eine hohe Rate und fundierte kollektive Datenbasis abstützt und zum anderen räumlich genau lokalisierbare Datenquellen heranzieht. Somit ergibt sich ein sehr zuverlässiges Verfahren zur Generierung von genau lokalisierbaren Verkehrsinformationen. Erreicht wird dies insbesondere durch die hier vorgeschlagene Kombination von denjenigen Informationen, die mittels der ersten Auswertung kollektiv mit einer hohen Rate, aber nur mit einer relativ geringen räumlichen Auflösung, erfasst werden können, mit denjenigen Informationen, die mittels der zweiten Auswertung individuell mit einer deutlich präziseren räumlichen Auflösung, aber nur mit einer relativ geringen Rate, erfasst werden können.

Vorzugsweise werden hierzu die kollektiven Daten bzw. Verkehrsinformationen in Bezug auf den Bereich räumlich genauer präzisiert zugeordnet, indem diese mit den individuellen Daten bzw. Verkehrsinformationen, die den einzelnen lokalisierbaren Unterbereichen zuordenbar sind, kombiniert bzw. verknüpft werden.

Beispielsweise geschieht dies bevorzugt innerhalb eines Mobilfunksystems durch Auswertungen von Mobilfunksignalen bzw. -daten, die von Mobilfunkgeräten erfasst werden, welche sich in Fahrzeugen befinden und welche somit durch den räumlichen Bereich bewegt werden. Das erfindungsgemäße Verfahren ist hier bestens dafür geeignet, auf der Basis von netzseitig erfassten Mobilfunkdaten zeitnah die Verkehrslage, insbesondere Verkehrstörungen, zu erkennen, ihre Auswirkungen zu quantifizieren und auf bestimmte Strecken bzw. Straßennetzabschnitte genau zu lokalisieren. Denn auch in diesem Anwendungsfall wird dies durch die vorgeschlagene Kombination der Informationen erreicht, welche mit hoher Rate von allen Mobilfunkgeräten erfasst werden, aber keine hohe räumliche Auflösung bieten, mit denjenigen Informationen, welche mit deutlich geringerer Rate nur von aktiven Mobilfunkgeräten erfasst werden, aber eine höhere räumliche Auflösung bieten.

Als Aufgabe der Erfindung ist also insbesondere die Erzeugung von Verkehrsinformationen für einen Verkehrstyp (z.B. Individualkraftverkehr) anzusehen. Hierzu werden erfindungsgemäß die nachfolgend genannten Anforderungen umfassend erfüllt, was im Detail noch später genauer beschrieben wird. Zu diesen Anforderungen gehören:
A) das Erkennen einer Störung,
B) die Quantifizierung der Störungsauswirkung und
C) die Lokalisierung der Störung (s. unten zur Anforderung D)
   Die Anforderungen nach A) bis C), können insbesondere auf Basis folgender Erkenntnisse bzw. Informationen erfüllt werden:
   Es existiert eine Einteilung des räumlichen Bereichs bzw. Gebietes (z.B. der sog. Location Area, kurz: LA).
   Es existiert eine ausreichende Zahl an Sensoren, für die folgende Informationen ermittelbar sind:
      i) Für alle Sensoren wird der Wechsel der Bereiche angezeigt (kollektive Daten).
      ii) Für eine geringere Anzahl aktiver Sensoren liegen weitere Daten vor, die eine genauere Lokalisierung innerhalb des Bereichs erlauben (individuelle Daten). Ist der Bereich in Unterbereiche (z.B. in Funkzellen) unterteilt, können dies z.B. die einzelnen Wechsel der Unterbereiche sein.
   Sofern die Sensoren auch andersweitig als in dem gewählten Verkehrstyp bewegt werden können, ergibt sich die weitere Notwendigkeit, nämlich noch die folgende Anforderung:
D) die Identifikation des Verkehrstyps eines Sensors.
   Die genannten Anforderungen lassen sich erfindungsgemäß durch eine geeignete Kombination beider Datenarten erreichen, nämlich:
   i) der kollektiven Daten, die mit hoher Rate vorliegen und somit eine fundierte kollektive Datenbasis darstellen, aber örtlich recht ungenau bestimmt sind mit
   ii) den individuellen Daten, die räumlich genau lokalisierbar sind, aber mit einer geringeren Rate vorliegen.

Die erfindungsgemäße Vorgehensweise wird später noch im Detail anhand von Ausführungsbeispielen beschrieben.

Neben dem hier vorgeschlagenen Verfahren stellt die vorliegende Erfindung auch ein System bzw. eine Zentrale zur Generierung von Verkehrsinformation und ihrer Lokalisierung innerhalb eines räumlichen Bereichs vor, welches das Verfahren durchführt, wobei die Zentrale in das System integriert ist und Rechenmittel umfasst, die eine Kombination folgender Schritte ausführen:
- die Rechenmittel berechnen mittels einer ersten Auswertung von kollektiv erfassten Signalen, die die Präsenz von Sensoren in dem räumlichen Bereich anzeigen, wobei sich zumindest ein Teil der Sensoren in Fahrzeugen befindet, kollektive Verkehrsinformationen in Form von kollektiven Daten, die mindestens einem in dem Bereich vorliegenden Verkehrsstrom von Fahrzeugen zuordenbar sind;
- die Rechenmittel berechnen mittels einer zweiten Auswertung von individuell erfassten Signalen, die jeweils die Präsenz eines einzelnen Sensors in einem lokalisierbaren Unterbereich des räumlichen Bereichs anzeigen, individuelle Verkehrsinformationen in Form von individuellen Daten, die jeweils einem einzelnen Fahrzeug zuordenbar sind;
- die Rechenmittel generieren mittels einer Kombination der kollektiven Daten und der individuellen Daten solche Verkehrsinformationen, die sich auf den zumindest einen Verkehrsstrom beziehen.

Auch hier werden die Begriffe sehr allgemein verstanden. Insbesondere wird unter "Verkehrsinformation" sehr allgemein jede Art von Daten verstanden, die durch Erfassung, insbesondere durch Erfassung der Signale, erhoben werden und für eine Analyse der Verkehrssituation dienen können. Somit kann auch hier von einer ersten Erhebung von kollektiv erfassten Daten bzw. einer zweiten Erhebung von individuell erfassten Daten gesprochen werden. Und die genannte Kombination bezieht sich auf diese beiden Daten. Ebenfalls ist hier anzumerken, dass die genannten Rechenmittel bzw. die davon ausgeführten Berechnungen auch für sich genommen ausgeführt werden können, d.h. ohne anschließende Kombination der kollektiv erfassten Daten und der individuell erfassten Daten. Aber auch hier soll gerade die Kombination der beiden Daten durchgeführt werden, wodurch die noch genauer beschriebenen Vorteile erzielt werden.

Bevorzugt ist das System als zelluläres Mobilfunksystem ausgestaltet, wobei der räumliche Bereich einen Funkversorgungsbereich darstellt, der mehrere Funkzellen umfasst, welche wiederum die lokalisierbaren Unterbereiche darstellen. Dabei werden zunächst die kollektiv erfassten Signale von aktiven und nicht-aktiven Mobilfunkgeräten bzw. Mobiltelefonen in der Zentrale zentral erfasst und ausgewertet, um kollektive Verkehrsinformationen zu erhalten. Zur Präzisierung bzw. genaueren Lokalisierung, insbesondere zur Zuordnung bzw. Validierung, dieser ersten Verkehrsinformation mit Bezug auf einzelne den Bereich durchquerende Verkehrswege bzw. Verkehrsströme erfolgt dann mit Hilfe der Rechenmittel die Auswertung von individuell erfassten Signalen. Dies sind im wesentlichen Mobilfunksignale von aktiven Mobilfunkgeräten, wobei die Signale bzw. Daten vorzugsweise die Funkzellenwechsel anzeigen. Somit kann die kollektive Verkehrsinformation, die ja auf einer breiten Datenbasis beruht, direkt mit den einzelnen Funkzellen entlang des untersuchten Verkehrsweges bzw. Verkehrstromes in Bezug gebracht werden, um daraus präzisierte Verkehrsinformationen, insbesondere genaue Informationen über lokale Verkehrsstörungen, zu generieren.

Zu diesen und weitere vorteilhafte Ausgestaltungen sei noch folgendes ausgeführt:

Vorzugsweise wird mittels der Überwachung der kollektiven Reisezeit ein Anstieg der Reisezeit als Verkehrsstörung in dem Bereich erkannt. Dabei wird vorzugsweise zur weiteren Lokalisierung der erkannten Verkehrstörung die kollektive Reisezeit auf einzelne Unterbereiche des Bereichs aufgeteilt, indem die Unterbereiche einer Verkehrsroute des Verkehrsstromes zugeordnet werden.

Auch werden vorzugsweise zur weiteren Lokalisierung der erkannten Verkehrstörung die individuellen Daten herangezogen, insbesondere nur individuelle Daten derjenigen Sensoren bzw. Fahrzeuge herangezogen, die als zu dem Verkehrsstrom zugehörig erkannt werden.

Die kollektiv und individuell erfassten Signale sind vorzugsweise Signale von mobilen Sensoren, insbesondere Mobilfunksignale von in den Fahrzeugen befindlichen Mobilfunkgeräten, die zentral erfasst und ausgewertet werden. In diesem Zusammenhang ist es für die erste Auswertung, d.h. die kollektive Datenerfassung und Auswertung, von Vorteil, wenn der Bereich ein Funkversorgungsbereich eines zellulären Mobilfunksystems ist und wenn die kollektiv erfassten Signale von aktiven und nicht-aktiven Mobilfunkgeräten erzeugte Mobilfunksignale sind, die den Eintritt der Mobilfunkgeräte in den Funkversorgungsbereich und/oder den Austritt der Mobilfunkgeräte aus dem Funkversorgungsbereich anzeigen. Durch die Auswertung von diesen bereits vorhandenen und zahlreich erfassbaren Signalen wird in eine große Datenbasis geschaffen, die erst eine fundierte Generierung der gewünschten Verkehrsinformation ermöglicht.

Für die zweite Auswertung der individuell erfassten Signale ist es von Vorteil, wenn die Unterbereiche einzelne Funkzellen des Funkversorgungsbereiches sind und wenn die individuell erfassten Signale von aktiven Mobilfunkgeräten erzeugte Mobilfunksignale sind, die den Wechsel zwischen den einzelnen Funkzellen anzeigen. Denn dies ermöglicht eine zweite Auswertung von ebenfalls vorhandenen Signalen, die wiederum die Ergebnisse der ersten Auswertung präzisieren kann und somit eine genaue Lokalisierung der generierten Verkehrsinformation ermöglicht.

Von Vorteil ist es auch, wenn die kollektiven Verkehrsinformationen Angaben über eine kollektive Präsenzdauer der Fahrzeuge in dem Bereich, insbesondere über eine kollektive Zeitdauer für Fahrten bzw. Reisen der Fahrzeuge durch den Bereich, angeben, und wenn die individuellen Verkehrsinformationen Angaben über eine individuelle Präsenzdauer des jeweiligen Fahrzeuges in dem Unterbereich, insbesondere über eine individuelle Zeitdauer für eine Fahrt bzw. Reise durch den Unterbereich, angeben.

In diesem Zusammenhang, aber auch unabhängig davon, wird vorteilhafterweise anhand einer geografischen Zuordnung der Unterbereiche, insbesondere der Funkzellen, zu sich in dem räumlichen Bereich befindlichen Verkehrswegen erkannt, welche Verkehrsströme bzw. Fahrzeuge sich entlang dieser Verkehrswege, bewegen. Hierbei wird bevorzugt anhand der individuellen Verkehrsinformationen erkannt, ob ein einzelnes Fahrzeug sich entlang eines dieser Verkehrswege bewegt. Diese Erkenntnis kann dann auf das Kollektiv der vielen Fahrzeuge projeziert werden, so dass ganze Verkehrströme genau lokalisiert werden können. Die geografische Zuordnung der Unterbereiche kann konkret folgendermaßen vorgenommen werden: Anhand der kollektiven Daten werden Fahrzeuge des Hauptverkehrsstroms identifiziert. Damit ist sichergestellt, dass sich das Fahrzeug auf dem zugehörigen Verkehrsweg befunden haben muss. Sofern für diese Fahrzeuge individuelle Daten vorliegen, werden diese zur Zuordnung der Unterbereiche auf dem Verkehrsweg verwendet.

Auch ist es von Vorteil, wenn die individuellen Verkehrsinformationen weitere Angaben, insbesondere Angaben über die Sende- und/oder Empfangsstärke von Mobilfunksignalen, umfassen, aus denen eine Entfernung bzw. ein Abstand zwischen dem individuellen Fahrzeug und einem geografischen Punkt in dem Unterbereich, insbesondere der Abstand zur Antenne einer Funkbasisstation, ableitbar ist.

Im folgenden werden nun die Erfindung und die sich daraus ergebenden Vorteile im Detail anhand von Ausführungsbeispielen beschrieben, wobei auf die beiliegenden Zeichnungen Bezug genommen wird:
- Fig. 1: zeigt in schematischer Darstellung einen Kartenausschnitt mit einem Funkversorgungsbereich (Location Area), in dem das Verfahren durchgeführt wird;
- Fig. 2: zeigt in vereinfachter Darstellung die Ergebnisse aus einer zeitlichen Beobachtung bzw. Überwachung der kollektiven Reisezeit innerhalb des Funkversorgungsbereichs;
- Fig. 3a: zeigt anhand einer simulierten Darstellung die Auswirkungen von Störungen auf die Reisezeit;
- Fig. 3b: zeigt entsprechend zur Fig. 3a die durch eine reale Datenauswertung gewonnene Darstellung der tatsächlich auftretenden Störungen auf die beobachtete Reisezeit;
- Fig. 4a/b,: die sich insbesondere auf die Situation nach der Fig. 3a beziehen, zeigen im Vergleich zueinander die anhand der erfassten Mobilfunkdaten erzielte Lokalisierung von Störungen aus erfassten Mobilfunkdaten; und
- Fig. 5: zeigt ein Ablaufdiagramm für ein erfindungsgemäßes Verfahren.

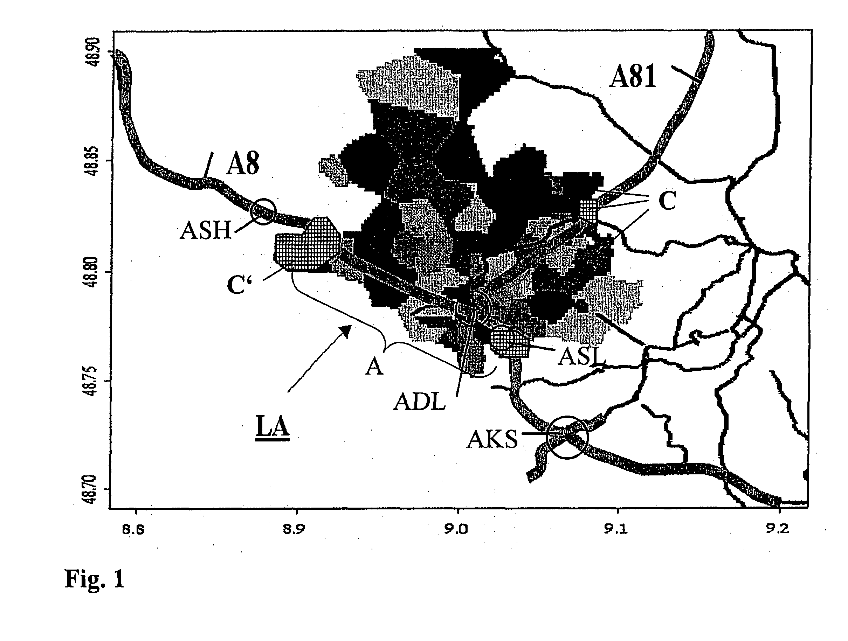

Die Figur 1 zeigt in schematischer Darstellung einen Kartenausschnitt mit einem räumlichen Bereich, der einem Funkversorgungsbereich (Location Area) eines zellulären Mobilfunknetzes entspricht, auf welchen das Verfahren exemplarisch angewendet wird. Konkret wird das Beispiel einer Location Area dargestellt. Die einzelnen, zugehörigen Funkzellen sind durch die verschiedenen Schattierungen kenntlich gemacht. Die Linien stellen das Autobahnnetz (breite Linien) und Bundesstraßennetz (schmale Linien) dar. Das hier betrachtet Beispiel bezieht sich insbesondere auf den Verkehrsstrom der Autobahn A8 von Ulm nach Karlsruhe durch das Gebiet (von unten nach links oben);

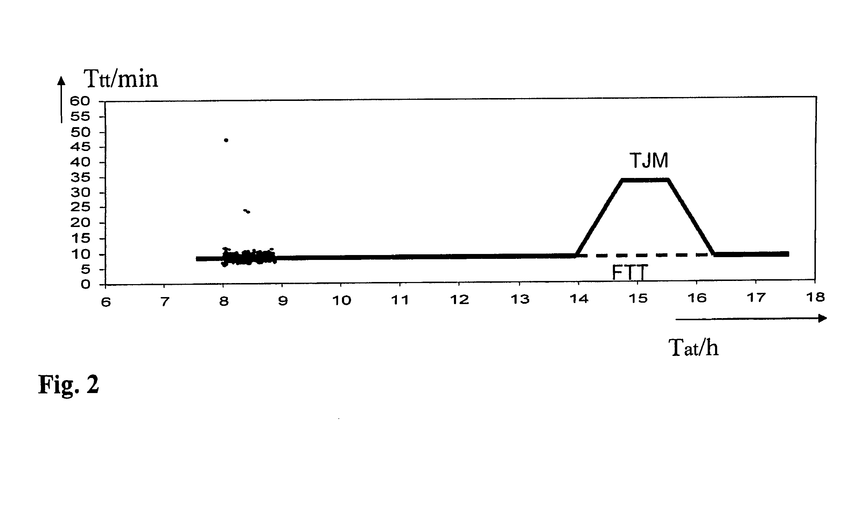

Die Figur 2 zeigt in vereinfachter Darstellung die Ergebnisse aus einer zeitlichen Beobachtung bzw. Überwachung der kollektiven Reisezeit einer Vielzahl von Fahrzeugen innerhalb des Bereiches. Konkret bezieht sich die Fig. 2 auf eine Überwachung der Reisezeit eines Verkehrsstroms. Die Datenpunkte stellen die Reisezeitmessungen einzelner Mobilfunkgeräte zwischen 8 und 9 Uhr dar. Der betrachtete Verkehrsstrom ist als Band zu erkennen. Außerhalb des Bandes liegende Datenpunkte werden als nicht dem Verkehrsstrom zugehörig verworfen.

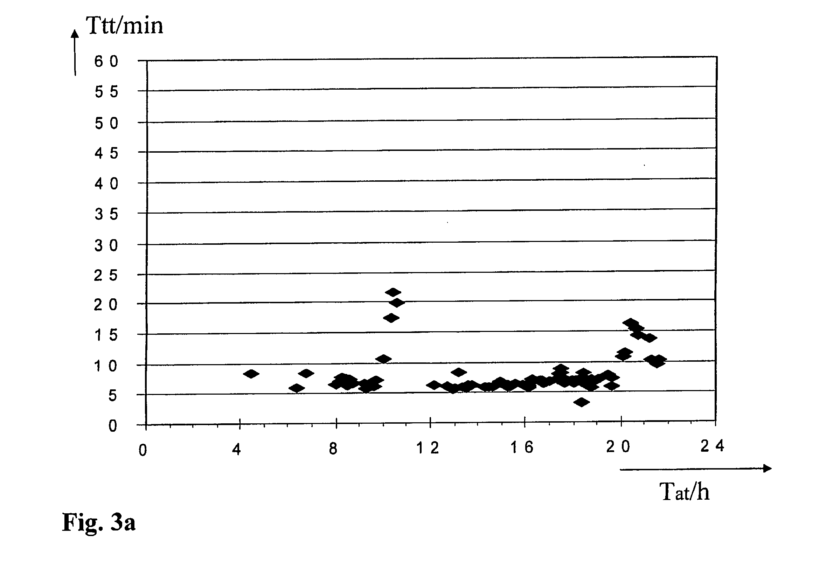

Die Figur 3a zeigt anhand von simulierten Daten die Auswirkungen von Störungen auf die kollektive Reisezeit. Konkret werden Auswirkungen von Störungen (1. Störung 10-12 Uhr und 2. Störung 20-22 Uhr) auf die beobachtbare Reisezeit dargestellt. In dem Diagramm sind nur etwa 1% der bei dem beschriebenen Verfahren zugänglichen Datenpunkte eingezeichnet.

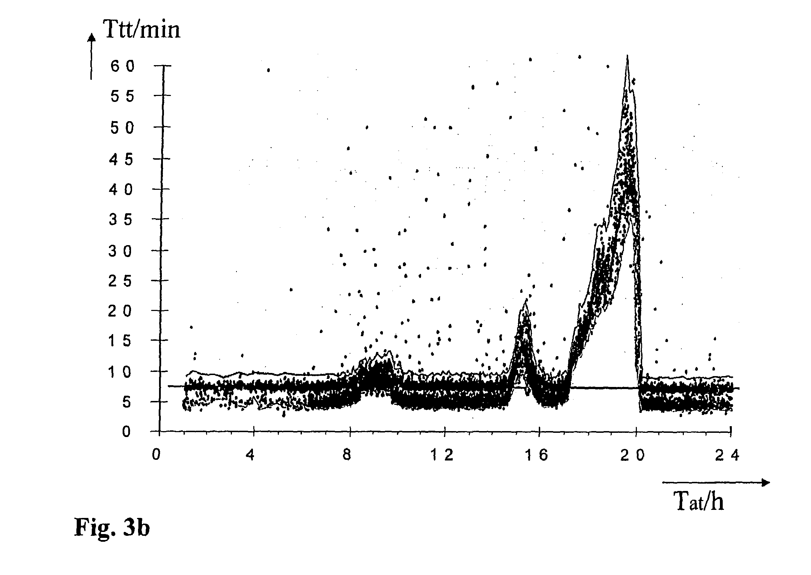

Die Figur 3b zeigt dazu anhand von tatsächlich gemessenen Daten die Auswirkungen der real auftretenden Störungen auf die beobachtete kollektive Reisezeit aller eingebuchten Mobilfunkgeräte (mobile Sensoren). Wie dort zu sehen ist, bildet sich über den Beobachtungszeitraum von 24 Stunden eine bandförmig verlaufende deutliche Häufung von Datenpunkten aus, die den Verlauf der kollektiven Reisezeit für den betrachteten Bereich LA wiedergibt. In ungestörten Zeitabschnitten, also in Zeiten freien Verkehrs, beträgt diese kollektive Reisezeit etwa 9 Minuten. Ein Anstieg der ermittelten kollektiven Reisezeit wird als Indikator für eine Störung angesehen. Hier werden konkret zu folgenden Zeiten mehr oder weniger starke Anstiege der Reisezeit festgestellt: gegen 9h, dann gegen 15h und schließlich gegen 18-19h. Nur die stärkeren Anstiege, die über einen gewissen Schwellwert hinaus gehen, werden als relevante Störungen angesehen. Auch kann die Zeitdauer der jeweiligen Störung ein Maß für die Entscheidung sein, ob eine relevante Störung vorliegt. In dem hier dargestellten Beispiel wird nur der zwischen 18h und 19h besonders stark ausgeprägte Anstieg der kollektiven Reisezeit als relevante Störung eingestuft. Diese drückt sich aus in einem max. Anstieg auf ca. 60 Minuten, was einer max. Verlustzeit von 52 Minuten entspricht. Demnach bewirkt die hier erkannte Störung in dem Funkversorgungsbereich LA eine Verlustzeit für die kollektiv beobachteten (also aller eingebuchten) Mobilfunkgeräte von max. 52 Minuten, was dafür spricht, dass in dem Bereich LA ein beachtlicher Verkehrsstau vorherrschen dürfte.

Um die Störung aber genauer zu lokalisieren, werden anschließend die individuell auf Funkzellenebene ermittelten Daten der aktiven Mobilfunkgeräte bzw. mobile Sensoren ausgewertet. Anhand der einzelnen Funkzellen-Wechsel können diese Daten ohne besonderen Aufwand erhoben und ausgewertet werden. Dazu verknüpft das hier vorgeschlagene Verfahren die kollektive Datenauswertung, welche über einen längeren Zeitraum (Tageszyklus) Offline erfolgt, mit der individuellen Datenauswertung, welche in Echtzeit bzw. Echtzeit-nah Online erfolgt.

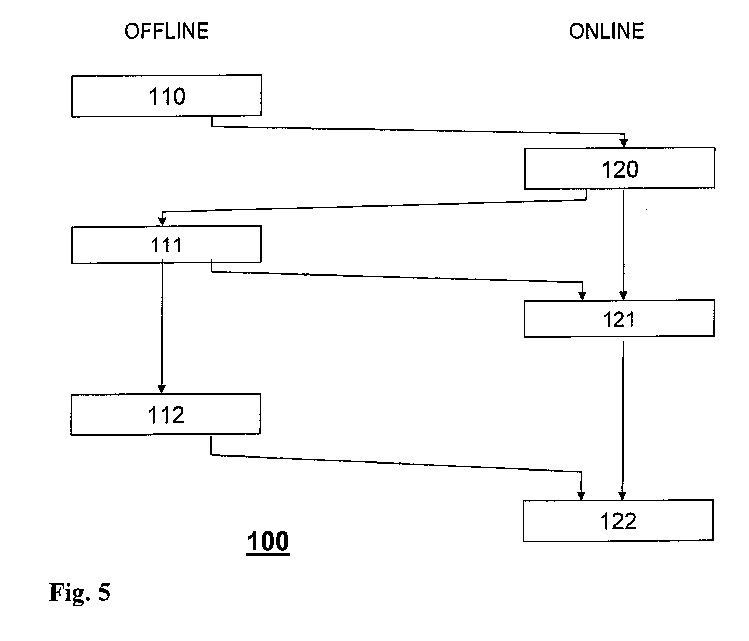

Anhand der Figur 5 wird nachfolgend dieses Verfahren anhand des dort exemplarisch dargestellten Ablaufsdiagramms beschrieben. Dabei zeigt die linke Seite des Diagramms die Offline durchgeführten Schritte und die rechte Seite zeigt die Online durchgeführten Schritte:

Zunächst wird in einem Schritt 110 auf Basis der kollektiven Daten mindestens ein Verkehrsstrom in dem Funkzellenbereich LA ermittelt. Das geschieht insbesondere anhand einer statischen Auswertung der vom System für die Location Updates erfassten Mobilfunkdaten. Jeder den Bereich LA durchquerender Verkehrsstrom führt zu einer Erhöhung der Rate der Location Updates an den Durchtrittspunkten. In Fig. 1 zeigen die schraffierten Zellen des Bereichs LA eine deutlich höhere Rate an Location Updates als die anderen Zellen. Durch statistische Analyse der Paare von Ein- und Austrittszeiten ergeben sich Kandidaten für Verkehrsströme. Für das in Fig. 1 dargestellte Beispiel ergeben sich somit sechs Verkehrsstrom-Kandidaten.

Bereits durch diese Auswertung können die signifikanten Verkehrströme erkannt und jeweils die Verläufe der entsprechenden Reisezeiten erfasst werden, so wie es beispielhaft in Fig. 3b für einen Verkehrsstrom dargestellt ist. Diese Auswertung kann vorzugsweise Offline erfolgen.

In einem Schritt 120 wird vorzugsweise Online eine fortlaufende Erfassung bzw. Beobachtung der kollektiven Reisezeit für den jeweiligen Verkehrsstrom durchgeführt. Dabei werden nur solche Daten ausgewertet, die zu dem jeweiligen Verkehrstrom gehören, d.h. die in dem jeweiligen Band (s. Fig. 3b) liegen. Bei einem markanten Anstieg der Reisezeit wird eine Störung erkannt und anhand der beobachteten Verlustzeit quantifiziert. Liegt das Ausmaß der Störung über einem vorgebbaren Schwellwert (Verlustzeit größer als z.B. das zweifache der Reisezeit bei freiem Verkehr), so wird dies als signifikante Störung angezeigt. Zusätzlich kann auch die Zeitdauer einer erhöhten Reisezeit als Indikator für eine Störung ausgewertet werden (z.B. erhöhte Reisezeit für mindestens 20 Min.).

Im Zustand des freien Verkehrs werden im Schritt 111 Offline alle individuellen Daten der zugehörigen Mobilfunkteilnehmer gesammelt, ausgewertet und so eine statistische Beschreibung der Abfolge der Funkzellen generiert. In einem einfachen Fall könnte sich so beispielsweise ergeben, dass der Bereich LA (die Location Area) in der Abfolge der Zellen C1,C2 und C3 in dieser Reihenfolge durchquert wird. Neben der reinen Zellfolge können auch die relativen Lagen der Zellen innerhalb der LA bestimmt werden. Beispielsweise beträgt die Gesamtreisezeit 5 Minuten im freien Verkehr und folgende einzelne Zellreisezeiten treten auf: in Zelle C1 0-3 Minuten, in Zelle C2 3-4 Minuten, in Zelle C3 4-5 Minuten. Ebenso sind hieraus die Zellreisezeit-Verteilungen im Zustand des normalen Verkehrs ermittelbar. Durch Vergleich dieser Spektren mit den allgemeinen, d.h. ohne die Einschränkung auf die Verkehrsstrom-Zugehörigkeit ermittelten Spektren, lässt sich ein Zugehörigkeitsmaß einer beobachteten Zellfolge zum Verkehrsstrom ermitteln. Im allgemeinen realen Fall ergeben sich keine einfache Zellabfolgen, sondern auch Bereiche, in denen unterschiedliche Zellfolgen parallel realisiert werden, beispielsweise könnte neben der Reihenfolge C1,C2,C3 auch eine Reihenfolge C1,C2,C3,C4,C3 oder C1,C2,C4,C3 auftreten. Die Vorgehensweise bleibt aber auch in diesem Fall anwendbar.

Wenn eine Störung detektiert wird, so erfolgt in einem Schritt 121, der Online durchgeführt wird, eine Aufteilung der kollektiven Reisezeit bzw. Verlustzeit für den Bereich LA auf die einzelne Unterbereiche (hier: Funkzellen) anhand individueller Daten aus Zellwechseln der aktiven, zum Verkehrsstrom gehörenden Mobilfunkgeräten. Zusätzlich kann noch die Entfernung zur Basisstation und/oder die Feldstärke ausgewertet werden. Im Ergebnis wird damit eine auf die Funkzellen bezogene Reisezeit erzielt, also eine Lokalisierung der Störung auf Funkzellebene erreicht. Diese Auswertung erfolgt beispielsweise so:

Die kollektive Reiszeit in dem Bereich LA betrage für den freien Verkehr etwa 9 Minuten und für die erkannte Störung z.B. 45 Minuten und der entsprechende Verkehrsstrom bewege sich durch drei etwa gleich große Funkzellen des Bereiches LA mit einer Teil-Reisezeit von je 3 Minuten.

Die Aufteilung der kollektiv gemessenen Gesamtreisezeit auf einzelne Unterbereiche bzw. Funkzellen wird folgendermaßen durchgeführt: Berechnung der Funkzellen-Reisezeiten aus individuellen Daten, Zugehörigkeit zum Verkehrsstrom über kollektive Daten oder Zugehörigkeitsmaße aus Schritt 111. Sofern z.B. für die oben genannten Zellen Reisezeiten von 30, 12 und 3 Minuten gemessen sind, liegt die Aufteilung fest und die Störung ist auf die beiden ersten Zellen lokalisiert. Allerdings liegen individuellen Daten nur für wenige Prozent der Mobilfunkteilnehmer vor. Die Kenntnis der Gesamtreiszeit aus Schritt 120 erlaubt eine Aufteilung aber auch dann, wenn die Zellreisezeit für einige Zellen nicht zuverlässig oder überhaupt nicht gemessen ist bzw. werden kann. Liegen beispielsweise nur für die zweite und dritte Zelle Messungen der Zellreisezeiten von 12 und 3 Minuten vor, so kann mittels der aus Schritt 120 bekannten Gesamtreisezeit die Zellreisezeit der ersten Zelle (ohne eigene Messung) zu 30 Minuten bestimmt und die Störung auch dann lokalisiert werden.

Die so gewonnenen Informationen müssen nun noch auf die konkreten Verkehrswege (s. z.B. A8 in Fig. 1) abgebildet werden.

Hierzu wird in Schritt 112 Offline die in Schritt 111 ermittelte Zellabfolge auf Verkehrswege abgebildet. Da zum einen die konkret zu betrachteten Zellen und ihre relative Lage auf dem Abschnitt, zum anderen auch der konkret betrachtete Verkehrsweg bekannt sind, ist dies wesentlich einfacher, als eine generelle Abbildung aller Zellen auf alle Verkehrswege durchzuführen.

Mittels dieser Information lässt sich dann in Schritt 123 die in Schritt 122 lokalisierte Störung auf den betrachteten Verkehrsweg abbilden.

Diese Lokalisierung der Störung auf einen konkreten Verkehrsweg kann evtl. durch Validierung zusätzlicher Daten aus stationärer Erfassung ergänzt werden. Hierzu wird auch auf die nachfolgende Beschreibung verwiesen, die zunächst Bezug auch die Fig. 4a und 4b nimmt:

Die Figuren 4a und 4b zeigen im Vergleich zueinander die Störungslokalisierung aus erfassten Mobilfunkdaten von mobilen Sensoren bzw. die Störungslokalisierung aus Daten von stationären Sensoren. Konkret dargestellt wird ein Vergleich der Störungslokalisation aus Mobilfunkdaten der Störungen aus Fig. 4a (links) mit den aus stationären Erfassungsquellen detektierten Störungen Fig. 4b (rechts). Beide Darstellungen zeigen einen identischen raum-zeitlichen Ausschnitt. Bei den Mobilfunkdaten (links) sind gestörte Abschnitte dunkel und freie Abschnitte hell gekennzeichnet. In der rechten Darstellung sind gestörte Bereiche unterschiedlich hell (stockender Verkehr hell, gestauter Verkehr dunkel) dargestellt.

Zunächst wird hier nochmals anhand der Figur 1 der hier beobachtete bzw. untersuchte räumliche Bereich beschrieben:

In der Figur 1 ist dafür exemplarisch ein bestimmter Funkversorgungsbereich LA, eine sog. Location Area, aus dem zellulären Mobilfunksystem GSM dargestellt, nämlich eine Location Area aus dem GSM-kompatiblen Mobilfunknetz D1 (GSM bedeutet "Global Standard for Mobile Communications"). Die einzelnen zu dem Funkversorgungsbereich LA gehörigen Funkzellen C' bzw. C sind durch die unterschiedliche Schattierung bzw. Mustergebung kenntlich gemacht. Die dabei schraffiert dargestellt Funkzellen stellen Eintritts- bzw. Austrittszellen des Funkversorgungsbereichs LA dar. Bei dem hier gezeigten Funkversorgungsbereich LA handelt es sich um eine Location Area, die westlich von Stuttgart liegt und die von mehreren Verkehrswegen, insbesondere den Autobahnen A81 und A8, durchzogen wird. Die breiteren Linien in der Figur 1 stellen das Autobahnnetz und die schmaleren Linien das Bundesstraßennetz dar.

Der hier gezeigte Kartenausschnitt umfasst u.a. auch das südwestlich von Stuttgart gelegene Autobahndreieck Leonberg ADL mit Streckenabschnitten der A81 sowie der A8. Auf der A8 überdeckt die Location Area einen Bereich mit einer westlichen Grenze zwischen der Anschlussstelle Heimsheim ASH und dem Autobahndreieck Leonberg ADL und einer östlichen Grenze zwischen der Ansschlusstelle Leonberg ASL und dem Autobahnkreuz Stuttgart AKS. Wie üblich ist auch hier dem Funkversorgungsbereich LA eine bestimmte Kennung, der sog. Location Area Code, zugeordnet. Anhand dieser Kennung könnten zwar die sich im Bereich LA befindlichen Mobilfunkgeräte (Mobilstationen) einer ersten groben Lokalisierung unterzogen werden, was aber für eine präzise Lokalisierung von Verkehrsstörungen in der Regel nicht ausreicht. Der Bereich LA umfasst mehrere Unterbereiche in Form von Funkzellen C' und C, die wiederum selbst jeweils eine eigene Funkzellen-Kennung (sog. Cell ID) haben und die häufig von Sektorantennen aus versorgt werden, welche je nach Anforderung einen bestimmten Öffnungswinkel haben. Diese Funkzellen-Daten bzw. Signale und weitere Parameter werden in dem Mobilunknetz zentral verwaltet, was für das erfindungsgemäße Verfahren von Nutzen ist. Die in einer (hier nicht dargestellten Zentrale) erfassten und verwalteten Daten dienen insbesondere auch dazu, das sog. An- und Abmelden von Mobilstationen zu erfassen, wenn diese sich durch die Funkversorgungsbereiche LA bzw. durch die einzelnen Funkzellen C bewegen und somit jeweils von einer Funkzelle zur nächsten weitergereicht werden müssen.

Dabei ist zu beachten: Es gibt zum einen das Weiterreichen von einem Funkversorgungsbereich (LA) in den nächsten. Dies geschieht für alle Mobiltelefone über den sog. Location Update. Zum anderen gibt es im Gespräch das Weiterreichen von einer Zelle zur nächsten über den sog. Handover. Dieses Handover (auch Handoff bzw. Funkzellen-Wechsel genannt) kann nur dann unterbrechungsfrei erfolgen, wenn das Mobilfunksystem diese Daten stets aktualisiert und frühzeitig die erforderlichen Handover-Prozesse einleitet.

Die Erfindung macht sich nun diese bereits vorhandenen System-Funktionalitäten zu Nutze, um eine präzise und genauer lokalisierbare Zuordnung von generierten Verkehrsinformationen zu realisieren. Dabei geht die Erfindung insbesondere von nachfolgend erläuterten Erkenntnissen aus, gemäß denen wie folgt vorgegangen wird:

Bereichswechsel können an allen Stellen (Funkzellen) vorkommen. Es wurde erkannt, dass ein Verkehrsfluss aber dazu führt, dass an dessen Durchtrittstellen eine deutlich erhöhte Anzahl an Bereichswechseln beobachtet wird. So sind z.B. die Funkzellen mit den höchsten Raten (siehe in beiliegender Fig. 1 die schraffierten Bereiche) mit den durchgehenden Autobahnen verbunden. Durch Festlegung des Eintritts- und Austrittspunkts wird erfindungsgemäß ein Verkehrsstrom festgelegt. Die Reisezeit durch das Gebiet eines so festgelegten Verkehrsstroms kann dann überwacht werden (siehe Fig. 2). Der Verkehrsstrom ist dort klar als Band zu erkennen. Es gibt aber auch Sensoren, die sich abweichend verhalten (z.B. durch Anhalten auf einem Rastplatz, Verfahren,...) und größere Reisezeiten ausweisen (siehe Ausreißer in Fig. 2). Aufgrund der hohen Statistik gelingt es aber, diese klar zu erkennen und auszufiltern. Ebenso erlaubt die hohe Statistik eine zeitnahe präzise Messung der mittleren Reisezeit. Verkehrsstörungen wirken sich durch einen erkennbaren Anstieg der so überwachten Reisezeit aus (siehe Fig. 2 und 3). An dieser Stelle sind (nur mit den kollektiven Daten) bereits die zuvor genannten Anforderungen A), B) und D) erfüllt.

Zur genaueren Störungslokalisation werden die individuellen Daten herangezogen, um die kollektiv gemessene Gesamtreisezeit auf die einzelnen Unterbereiche aufzuteilen, wobei Störungslokalisation sowohl durch positiv auf eine Störung hindeutende Informationen als auch auf freien Verkehr deutende Reisezeiten der Unterbereiche erfolgt.

Hierzu muss zunächst einmal eine Zuordnung der Unterbereiche auf die Route des Verkehrsstroms erfolgen. Dies geschieht mit Rückgriff auf die kollektiven Daten, indem zuerst die dort zum Verkehrsstrom zugehörigen Sensoren ausgewählt werden. Aus den individuellen Daten dieser Sensoren wird eine wahrscheinlichkeits-theoretische Beschreibung abgeleitet, welche zum einen die Zugehörigkeit der Zellen zum Verkehrstrom, zum anderen dessen Lage auf der Route beschreibt. Dieser Punkt ist allerdings nicht so leicht zu lösen, als man es vielleicht zunächst vermuten würde:

Es ist eben nicht so, wie man vielleicht aus der Fig. 1 erwarten könnte, dass die mobilen Sensoren (Mobilstationen bzw. Handies) alle identische Funkzellen-Wechselfolgen liefern würden. Tatsächlich hängt die gewählte Zellfolge von vielen Faktoren ab, z.B. Antennenausrichtung, Netzlast,..., ab, so dass selbst in ein und demselben Fahrzeug mitgeführte Mobiles völlig unterschiedliche Zellfolgen produzieren können.

Mithilfe der erfindungsgemäßen Lösung, die nachfolgend noch im Detail beschrieben wird, werden die individuellen Daten dem Verkehrsstrom zugeordnet. Diese Abbildung ist jedoch nicht immer eindeutig, es kommt z.B. durchaus vor, dass eine Funkzellen-Wechselfolge Zelle1->Zelle2->Zelle3 auch durch einen Sensor z.B. eines Radfahrers oder Fußgängers erzeugt wird. Die Unterdrückung dieser Falschzuordnungen geschieht zum einen über die Bedingung, dass keine Zellreisezeit größer als die Gesamtreisezeit sein kann (Denn solange eine "freie" Gesamtreisezeit gemessen wird, kann man sich die Betrachtung der individuellen Daten im Prinzip sparen. Diese wird erst dann von wesentlicher Bedeutung, wenn eine kollektiv gemessene Störung vorliegt) und zum anderen durch die Unterdrückung von Datensätzen, bei denen in zeitlicher Nähe ein schneller Sensor beobachtet wird.

Die Erfindung ist vorzugsweise (aber nicht ausschließlich) auf zelluläre Mobilfunknetze anwendbar:

In einem zellulären Mobilfunknetz, wie dem hier betrachteten GSM-Netz, werden zum einen Daten aller im Netz eingebuchter Mobilfunkgeräte erfasst, auch wenn das jeweilige Mobilfunkgerät nicht aktiv (z.B. für Telefonate, GPRS-Übertragung usw.) genutzt wird. Hierunter fallen u.a. die Informationen, wann und wo ein Mobilfunkgerät den Funkversorgungsbereich LA (Location Area), gewechselt hat. Die den Berech LA durchquerenden Verkehrsströme machen sich dadurch bemerkbar, dass bestimmte Eintritts-Austrittskombinationen verstärkt auftreten. Aus dem Eintritts- und Austrittszeitpunkt eines Mobilfunkgeräts lässt sich dessen Reisezeitdauer, hier kurz Reisezeit genannt, durch das Gebiet ermitteln. Da auf dieser Datenebene alle Mobilfunkgeräte erfasst werden, liegt bei dem derzeitigen Durchsetzungsgrad mit Mobilfunkgeräten eine repräsentative Stichprobe des Gesamtverkehrsstroms vor, der sich leicht in einer kollektiven Betrachtung identifizieren lässt.

Anhand der Figur 2 wird solch eine kollektive Beobachtung von einer Vielzahl von Mobilfunkgeräten veranschaulicht. Die Fig. 2 bezieht sich auf die Überwachung der Reisezeit eines Verkehrsstroms: Die jeweiligen Datenpunkte (einzelne Punkte bzw. Anhäufungen davon) stellen die Reisezeitmessungen einzelner Mobilfunkgeräte zwischen 8 und 9 Uhr dar. Der betrachtete Verkehrsstrom ist als Band (gerade Linie) zu erkennen. Außerhalb des Bandes liegende Datenpunkte werden als nicht dem Verkehrsstrom zugehörig verworfen. In dem Diagramm ist die kollektive Reisezeit Ttt (in Minuten) über der sog. Ankunftszeit Tat (Uhrzeit in Stunden) aufgetragen. Wie die Fig. 2 zeigt, beträgt bei ungestörter Verkehrslage die ideale Reisezeit FTT (die sog. "Freie Reisezeit") etwa 9 Minuten. Dieses niedrige Niveau wird auch bei geringem Verkehrsaufkommen und ungestörter Verkehrslage in der Regel eingehalten. Exemplarisch für die meisten Zeiten zeigt die Fig. 2 zwischen 8 und 9 Uhr (Tat = 8-9 h) an, dass die kollektive Reisezeit im wesentlichen nur zwischen 5 und 10 Minuten variiert. Lediglich vereinzelte Messergebnisse (Ausreißer) zeigen erhöhte Reisezeiten von ca. 25 Minuten bzw. 48 Minuten an. Insgesamt aber ergibt sich aus der Auswertung der kollektiv erfassten Signale, dass die allermeisten Mobilfunkgeräte den Funkversorgungsbereich (siehe LA in Fig. 1) innerhalb der idealen Reisezeit von etwa 9 Minuten durchqueren oder zumindest nicht länger darin verbleiben. Sollte die Auswertung für die meisten der Mobilfunkgeräte eine deutlich höhere Reisezeit ergeben, so wie es in der Fig. 2 für den Zeitraum Tat = 14 - 16h angedeutet ist, kann davon ausgegangen werden, dass in diesem beobachteten Zeitraum eine allgemeine Verkehrsstörung vorliegt. Wo genau bzw. an welchem Ort innerhalb des Bereichs LA diese Störung vorliegt, lässt sich anhand dieser ersten Auswertung jedoch nicht genau lokalisieren.

Die anhand der Fig. 2 verdeutlichte erste Auswertung der kollektiv erfassten Signale bzw. Daten, hat aber u.a. den Vorteil, dass aufgrund der hohen Durchsetzung die Daten in rascher zeitlicher Abfolge zur Verfügung stehen. Dies erlaubt eine präzise Messung der kollektiven Reisezeit innerhalb eines kurzen Zeitintervalls. Diese kollektive Reisezeit kann nun fortlaufend bestimmt und über die Zeit überwacht werden. Jedwede Störung des Verkehrsstroms innerhalb des Gebietes macht sich in einem Anstieg der beobachteten Reisezeit bemerkbar (s. Fig. 2, rechts), welches sowohl eine zeitnahe Detektion der Störung als auch einer präzise quantitative Messung ihrer Auswirkung in Form der durch sie hervorgerufenen Verzögerung erlaubt. Insofern lassen sich die Anforderungen bzgl. Aktualität und Erfassung der Störungsauswirkungen bereits an dieser Stelle erfüllen. Einzig die Lokalisierung der Störung lässt sich nur mit einer Genauigkeit auf die gesamte Streckenabschnittslänge A innerhalb des Bereiches LA (s. Fig. 1) erreichen, was in der Regel nicht ausreicht. In dem hier gezeigten Beispiel könnte man allenfalls die Störung nur zwischen dem Autobahnkreuz Stuttgart (AKS) süd-östlich der LA und der Anschlussstelle Heimsheim (ASH) westlich der LA lokalisieren. Eine genauere Zuweisung auf einzelne Streckenabschnitte wäre nicht möglich.

Erfindungsgemäß werden nun noch weitergehende Daten ausgewertet, die aber nur für aktive (z.B. während eines Telefonats) Mobilfunkgeräte erfasst zu werden brauchen. Dies sind insbesondere die Signale zu den einzelnen Funkzellen-Wechseln (Zellwechselinformationen). Darüber hinaus können auch noch weitere Informationen, wie Entfernungsangaben zur Antenne und Sende-/Empfangsstärke - Informationen hinzukommen, sofern der Zugriff auf die Netzdaten an geeigneter Stelle erfolgt.

Bereits aus den Zellwechselinformationen (Eintritt und Austritt aus einer Zelle) lassen sich (analog zu oben beschriebenen kollektiven Reisezeiten) nun individuelle Verkehrsinformation, nämlich individuell Zellreisezeiten, ermitteln. Da zu einem Zeitpunkt nur ein geringer Bruchteil der Mobilfunkgeräte aktiv ist, fallen Informationen auf dieser Ebene bzw. bei dieser Auswertung deutlich weniger häufig an als bei der zuvor beschriebenen Auswertung der kollektiven Daten. Diese individuellen Informationen werden nun herangezogen, um die zuvor bereits anhand der kollektiven Daten detektierte und vermessene Störung räumlich näher einzugrenzen.

Dazu wird u.a. die Route eines Verkehrsstroms entlang des interessierenden Verkehrsweges, d.h. die entsprechend möglichen Zellfolgen, bestimmt. Hierzu kann man einen wahrscheinlichkeitstheoretischen Ansatz wählen, mit dem z.B. die Zugehörigkeit einer Funkzelle zur Route des Verkehrsstroms ermittelt bzw. bestimmt werden kann. (Hingegen wird die Zugehörigkeit eines Mobiltelefons zum Verkehrsstrom über die kollektiven Daten ermittelt, z.B. so wie oben beschrieben wurde.) Was die Zugehörigkeit der Funkzellen zur Route des Verkehrsstroms angeht, so ist z.B. anhand der Fig. 1 zu sehen, dass für die Route im Abschnitt A zwischen dem Autobahndreieck Leonberg und der Anschlussstelle Heimsheim im wesentlichen sechs sich aneinander reihende Funkzellen in Betracht kommen.

Hierdurch wird das Problem der ungenauen Ortsinformation deutlich reduziert, da nur noch auf die bekannte Strecke des Verkehrsstroms abgebildet werden muss, nicht aber auf das gesamte Straßennetz. Mithilfe dieser Routenbeschreibung lassen sich nun auch einzelne Funkzellen und somit auch die Zellwechselinformationen und Zellreisezeiten innerhalb des Abschnittes zuordnen. Eine jedoch nur und ausschließlich auf dieser Ebene (zweite Auswertung) ansetzende Datenerfassung hätte das Problem, dass aufgrund der deutlich geringeren Rate eine zeitnahe und präzise Zellreisezeit-Bestimmung nur schwer möglich ist.

Nun liegt aber durch die erste Auswertung (s. Fig. 2) bereits eine präzise Messung der Gesamtreisezeit in dem gesamten Bereich LA vor, sozusagen in der "Large Area", die nur noch auf die einzelnen Funkzellen entlang der Route aufgeteilt werden muss. Dies stellt wesentlich geringere Anforderungen an den Datenerfassungs- und Datenberechnungsaufwand. Die örtliche Eingrenzung der Störung wird dabei nicht nur durch Zellreisezeit-Informationen erreicht, die auf eine Störung hindeuten und somit ein positives Signal darstellen, dass sich die Störung im zugeordneten Abschnitt befindet, sondern wird ebenso durch Zellreiseinformationen erreicht, die auf freien Verkehr hindeuten, da in letzterem Fall der entsprechende Abschnitt als nicht zur Störung gehörend feststeht. Prinzipiell ist somit auch eine Störungslokalisation möglich, ohne dass auch nur ein auf eine Störung hindeutendes Messdatum auf dieser Ebene vorliegen muss. Durch das Zusammenwirken beider Auswertungen bzw. Mechanismen lässt sich der gestörte Abschnitt schnell eingrenzen (s. hierzu auch Figuren 2 und 3 im Vergleich mit Figuren 4a/b). Im Beispiel lassen sich damit beide Störungen eindeutig zwischen dem Autobahndreieck Leonberg (ADL) und der nachfolgenden Anschlussstelle Heimsheim (ASH) gelegenen Abschnitt der Location Area eingrenzen.

Ausgehend von der Figur 2 sind in den Figur 3a im näheren Detail die (simulierten) Auswirkungen von Störungen auf die beobachtbare Reisezeit Ttt dargestellt, nämlich die einer ersten Störung von etwa 10-12 Uhr und einer zweiten Störung von etwa 20-22 Uhr. Dabei beruht die Auswertung auf einer Vielzahl von kollektiv erfassten Daten. Die Auswertung erfolgte anhand von Testdaten, die von dem Mobilfunknetzbetreiber T-Mobile zur Verfügung gestellt wurden. Datensätze, aus denen sich das kollektive Verhalten ableiten lässt, lagen nur für den 1h-Zeitbereich aus der Fig. 2 vor. Datensätze, aus denen sich das individuelle Verhalten ableiten lässt, lagen für den gesamten in den Fig. 3a und 4 dargestellten Tag vor. Für die Fig. 3a wurden die kollektiven Daten anhand der Individualdaten emuliert, in dem Mobiltelefone betrachtet wurden, die über den gesamten Verkehrsweg telefoniert haben. Diese stellen aber nur rund 1 % aller Mobilfunkteilnehmer dar, so dass in der Abbildung auch nur rund 1 % der prinzipiell bei der Methode verfügbaren Daten gezeigt werden kann. Sowohl anhand der Figur 2 wie auch anhand der Figur 3a lässt sich aber keine genauere Lokalisierung der Störungen vornehmen. Gleiches gilt für die realen Daten nach Fig. 3b. Die Lokalisierung wird erst in Kombination mit den individuell erfassten Daten ermöglicht.

In der Figur 4a sind Zellreisezeiten, welche auf freien Verkehr hindeuten, grau und solche, die auf gestörten Verkehr hindeuten, dunkelgrau bzw. schwarz dargestellt (siehe dort die entsprechend markierten Bereiche). Das Erkennen solcher Störungsgebiete bzw. die Unterscheidung zu den ungestörten Gebieten wird folgendermaßen erreicht: Zunächst wird eine Grenzgeschwindigkeit festgelegt, welche die beiden Zustände voneinander trennt. Dies allein führt jedoch aufgrund mehrerer möglicher Störeffekte dazu, dass auch im freien Verkehr häufig Abschnitte als gestört markiert werden. Diese Fluktuationen können aber zuverlässig durch die folgende Maßnahme unterdrückt werden: Zur Unterdrückung der Fluktuationen wird die Methode vorgeschlagen, dass Datensätze ignoriert werden, wenn in zeitlicher Nähe ein schnelles Mobilfunkgerät beobachtet wird. Prinzipiell werden Fluktuationen auch durch Kenntnis der Gesamtreiszeit aus den kollektiven Daten unterdrückt, da keine Zellreisezeit größer als die Gesamtreisezeit sein kann. Im Falle eines Mangels (fehlender) kollektiver Daten für den in der Fig. 4a gezeigten Zeitraum kann diese Methode dann aber nicht angewendet werden. Sobald also während des Aufenthalts des für freien Verkehr scheinbar zu langsam bewegten Mobilfunkgerätes oder in unmittelbarer zeitlicher Nähe ein anderes Gerät eine für freien Verkehr hinreichend kleine Zellreisezeit aufweist, wird das Störsignal ignoriert. Im Ergebnis erhält man raum-zeitlich klar abgegrenzte, zusammenhängende Gebiete gestörten Verkehrs, wie es in der Figur 4a dargestellt ist.

Die Figur 4a zeigt demnach die Auswertung bzw. Störungslokalisation anhand von erfassten Mobilfunkdaten, d.h. von mobilen Sensoren bzw. Datenquellen. Im Vergleich dazu zeigt die Figur 4b eine Auswertung bzw. Störungslokalisation, die mittels von stationären Sensoren bzw. Erfassungsquellen detektierter Störungen erfolgt. Die Figuren 4a und 4b zeigen also im Vergleich der Störungslokalisation aus Mobilfunkdaten der Störungen aus der Fig.3 (links) mit den aus stationären Erfassungsquellen detektierten Störungen (rechts). Beide Darstellungen zeigen einen identischen raum-zeitlichen Ausschnitt. Bei den Mobilfunkdaten (linke Darstellung) sind gestörte Abschnitte dunkel und freie Abschnitt grau gekennzeichnet. In der rechten Darstellung sind gestörte Bereiche unterschiedlich hell dargestellt, nämlich Bereiche mit stockendem Verkehr sind hell und die mit gestautem Verkehr dunkel dargestellt. Auch dieser Vergleich verdeutlicht die Zuverlässigkeit des hier vorgeschlagenen Verfahrens.

Zusammenfassend werden also hier ein Verfahren und Vorrichtungen vorgeschlagen, welche auf Basis von netzseitig erfassten Mobilfunkdaten zeitnah Verkehrstörungen erkennen, ihre Auswirkungen quantifizieren und auf Straßennetzabschnitte lokalisieren können. Erreicht wird dies durch eine geeignete Kombination der Informationen, die mit hoher Rate von allen Mobilfunkgeräten erfasst werden, aber keine hohe räumliche Auflösung bieten, mit den Informationen, die mit deutlich geringerer Rate nur von aktiven Mobilfunkgeräten erfasst werden, aber eine höhere räumliche Auflösung bieten.

## Patentansprüche

1. Verfahren zur Generierung von Verkehrsinformationen und ihrer Lokalisierung innerhalb eines räumlichen Bereichs (LA) eines zellulären Mobilfunksystems, in dem Mobilfunkgeräte eingebucht sind, wobei sich zumindest ein Teil der Mobilfunkgeräte in Fahrzeugen befindet, die sich durch den räumlichen Bereichs (LA) in mindestens einem Verkehrstrom entlang eines Verkehrsweges bewegen, wobei das Verfahren folgende Schritte aufweist:
- mittels einer ersten Auswertung von kollektiven Daten, die Eintritte in den Bereich (LA) und Austritte aus dem Bereich (LA) von eingebuchten Mobilfunkgeräten anzeigen, wird für den mindestens einen Verkehrstrom eine kollektive Reisezeit durch den Bereich (LA) bestimmt;
- mittels einer zweiten Auswertung von individuellen Daten, die die Präsenz einzelner aktiver Mobilfunkgeräte in Unterbereichen (C') des räumlichen Bereichs (LA) anzeigen, wird die kollektive Reisezeit auf die Unterbereiche (C, C') des räumlichen Bereichs (LA) aufgeteilt, um für einzelne Unterbereiche (C') davon eine dort vorherrschende Reisezeit zu ermitteln;
- mittels einer Abbildung der einzelnen Unterbereiche (C') auf ein Straßenetz wird die Verkehrsinformation generiert und lokalisiert.

2. Verfahren nach Anspruch 1, **dadurch gekennzeichnet, dass** der Bereich ein Funkversorgungsbereich (LA) des zellulären Mobilfunksystems ist und dass die Unterbereiche einzelne oder mehrere Funkzellen (C', C) des Funkversorgungsbereiches (LA) sind.

3. Verfahren nach Anspruch 1 oder 2, **dadurch gekennzeichnet, dass** mittels einer Überwachung der kollektiven Reisezeit ein Anstieg der Reisezeit als Verkehrsstörung in dem Bereich (LA) erkannt wird.

4. Verfahren nach Anspruch 3, **dadurch gekennzeichnet, dass** mittels eines vorgebaren Schwellwertes und/oder einer vorgebbaren Zeitdauer die erkannte Verkehrsstörung quantifiziert wird.

5. Verfahren nach einem der vorhergehenden Ansprüche,
**dadurch gekennzeichnet, dass** die kollektiven Daten mittels einer, insbesondere statistischen, Auswertung von Eintritts- und Austrittszeitpunkten bestimmt werden, die den Eintritt in den Bereich (LA) bzw. den Austritt aus dem Bereich (LA) der aktiven und nicht-aktiven Mobilfunkgeräte anzeigen.

6. Verfahren nach Anspruch 3, **dadurch gekennzeichnet, dass** die kollektiven Daten mittels einer Auswertung von Aktualisierungsdaten für den Funkversorgungsbereich (LA) bezüglich des Eintritts- und Austritts der aktiven und nicht-aktiven Mobilfunkgeräte ermittelt werden.

7. Verfahren nach einem der vorhergehenden Ansprüche,
**dadurch gekennzeichnet, dass** die individuellen Daten mittels einer, insbesondere statistischen, Auswertung von Eintritts- und Austrittszeitpunkten bestimmt werden, die den Eintritt in den Unterbereich (C') bzw. den Austritt aus dem Unterbereich (C') der aktiven Mobilfunkgeräte anzeigen.

8. Verfahren nach Anspruch 5, **dadurch gekennzeichnet, dass** die individuellen Daten mittels einer Auswertung von Daten für einen Funkwechsel zwischen den Funkzellen (C', C) bezüglich des Eintritts- und/oder Austritts der aktiven Mobilfunkgeräte ermittelt werden.

9. Verfahren nach einem der vorhergehenden Ansprüche,
**dadurch gekennzeichnet, dass** aus den individuellen Daten für den mindestens einen Unterbereich, insbesondere für die mindestens eine Funkzelle (C', C) eine individuelle Reisezeit bzw. Funkzellen-Reisezeit ermittelt wird.

10. Verfahren nach einem der vorhergehenden Ansprüche,
**dadurch gekennzeichnet, dass** die individuellen Daten mit den kollektiven Daten verknüpft werden, indem die kollektive Reisezeit aufgeteilt und in Teilen auf die einzelnen Unterbereiche (C',C) des Bereichs (LA) abgebildet wird,
um mit aus den individuellen Daten ermittelten individuellen Reisezeiten bzw. Funkzellen-Reisezeiten verglichen zu werden.

11. Verfahren nach Anspruch 8, **dadurch gekennzeichnet, dass** zur Lokalisierung der erkannten Verkehrstörung nur die individuellen Daten derjenigen Mobilfunkgeräte herangezogen werden, deren individuelle Reisezeit zu der kollektiven Reisezeit passt.

12. Verfahren nach einem der vorhergehenden Ansprüche,
**dadurch gekennzeichnet, dass** durch Auswertung der kollektiven und individuellen Daten für den mindestens einen Verkehrstrom innerhalb des Bereichs (LA) eine Zuordnung, insbesondere Abfolge, von Unterbereichen (C', C) bestimmt wird, die einem Verlauf des Verkehrsweges entsprechen.

13. Verfahren nach Anspruch 10, **dadurch gekennzeichnet, dass** die Zuordnung bzw. Abfolge von Unterbereichen (C', C) ohne eine geografische Zuweisung der Unterbereiche zu einer Landkarte lediglich anhand der statistischen Auswertung der kollektiven und individuellen Daten erfolgt.

14. Verfahren nach einem der vorhergehenden Ansprüche,
**dadurch gekennzeichnet, dass** die Auswertung der individuellen Daten durch zusätzliche Daten aus einer stationären Verkehrsbeobachtung ergänzt wird.

15. Verfahren nach einem der vorhergehenden Ansprüche,
**dadurch gekennzeichnet, dass** die Auswertung der individuellen Daten durch zusätzliche Daten oder Angaben über die Sende- und/oder Empfangsstärke von Mobilfunksignalen ergänzt wird.

16. System zur Generierung von Verkehrsinformationen und ihrer Lokalisierung innerhalb eines räumlichen Bereichs (LA) eines zellulären Mobilfunksystems, in dem Mobilfunkgeräte eingebucht sind, wobei sich zumindest ein Teil der Mobilfunkgeräte in Fahrzeugen befindet, die sich durch den räumlichen Bereichs (LA) in mindestens einem Verkehrstrom entlang eines Verkehrsweges bewegen, wobei das System eine Zentrale mit Rechenmitteln aufweist, die folgende Schritte ausführen:
- die Rechenmittel bestimmen mittels einer ersten Auswertung von kollektiven Daten, die Eintritte in den Bereich (LA) und Austritte aus dem Bereich (LA) von eingebuchten Mobilfunkgeräten anzeigen für den mindestens einen Verkehrstrom eine kollektive Reisezeit durch den Bereich (LA);
- die Rechenmittel teilen mittels einer zweiten Auswertung von individuellen Daten, die die Präsenz einzelner aktiver Mobilfunkgeräte in Unterbereichen (C') des räumlichen Bereichs (LA) anzeigen, die kollektive Reisezeit auf die Unterbereiche (C, C') des räumlichen Bereichs (LA) auf, um für einzelne Unterbereiche (C') davon eine dort vorherrschende Reisezeit zu ermitteln;
- die Rechenmittel generieren und lokalisieren die Verkehrsinformation mittels einer Abbildung der einzelnen Unterbereiche (C') auf ein Straßenetz.

17. Zentrale zur Generierung von Verkehrsinformation und ihrer Lokalisierung innerhalb eines räumlichen Bereichs (LA) eines zellulären Mobilfunksystems, in dem Mobilfunkgeräte eingebucht sind, wobei sich zumindest ein Teil der Mobilfunkgeräte in Fahrzeugen befindet, die sich durch den räumlichen Bereichs (LA) in mindestens einem Verkehrstrom entlang eines Verkehrsweges bewegen, wobei die Zentrale Rechenmittel aufweist, die folgende Schritte ausführen:
- die Rechenmittel bestimmen mittels einer ersten Auswertung von kollektiven Daten, die Eintritte in den Bereich (LA) und Austritte aus dem Bereich (LA) von eingebuchten Mobilfunkgeräten anzeigen für den mindestens einen Verkehrstrom eine kollektive Reisezeit durch den Bereich (LA);
- die Rechenmittel teilen mittels einer zweiten Auswertung von individuellen Daten, die die Präsenz einzelner aktiver Mobilfunkgeräte in Unterbereichen (C') des räumlichen Bereichs (LA) anzeigen, die kollektive Reisezeit auf die Unterbereiche (C, C') des räumlichen Bereichs (LA) auf, um für einzelne Unterbereiche (C') davon eine dort vorherrschende Reisezeit zu ermitteln;
- die Rechenmittel generieren und lokalisieren die Verkehrsinformation mittels einer Abbildung der einzelnen Unterbereiche (C') auf ein Straßenetz.

## Claims

1. Method for generating traffic information and the localization thereof within a location area (LA) of a cellular mobile radio communications system in which mobile radio units are registered, wherein at least some of the mobile radio units are located in motor vehicles that move through the location area (LA) in at least one traffic flow along a traffic route, wherein the method has the following steps:
- a collective travel time through the area (LA) is determined for the at least one traffic flow by means of a first analysis of collective data that indicate entries into the area (LA) and exits from the area (LA) by registered mobile radio units;
- the collective travel time is apportioned among the subareas (C, C') of the location area (LA) by means of a second analysis of individual data that indicate the presence of individual active mobile radio units in subareas (C') of the location area (LA) in order to determine therefrom a travel time for individual subareas (C') prevailing there;
- the traffic information is generated and localized by means of a mapping of the individual subareas (C') onto a road network.

2. Method according to claim 1, **characterized in that** the area is a radio coverage area (LA) of the cellular mobile radio communications system and **in that** the subareas are individual or multiple radio cells (C', C) of the radio coverage area (LA).

3. Method according to claim 1 or 2, **characterized in that** an increase in the travel time is detected as traffic congestion in the area (LA) by means of a monitoring of the collective travel time.

4. Method according to claim 3, **characterized in that** the detected traffic congestion is quantified by means of a predefinable threshold value and/or a predefinable time period.

5. Method according to any one of the preceding claims, **characterized in that** the collective data are determined by means of an analysis, in particular a statistical analysis, of entry and exit points that indicate the entry into the area (LA) or the exit from the area (LA) of the active and inactive mobile radio units.

6. Method according to claim 3, **characterized in that** the collective data are determined by means of an analysis of update data for the radio coverage area (LA) regarding the entry and exit of the active and inactive mobile radio units.

7. Method according to any one of the preceding claims, **characterized in that** the individual data are determined by means of an analysis, in particular a statistical analysis, of entry and exit times that indicate entry into the subarea (C') or, respectively, exit from the subarea (C') by the active mobile radio units.

8. Method according to claim 5, **characterized in that** the individual data are determined by means of an analysis of data for a handover between the radio cells (C', C) regarding the entry and/or exit of the active mobile radio units.

9. Method according to any one of the preceding claims, **characterized in that** an individual travel time or radio cell travel time is determined from the individual data for the at least one subarea, in particular for the at least one radio cell (C', C).

10. Method according to any one of the preceding claims, **characterized in that** the individual data are linked to the collective data **in that** the collective travel time is apportioned and mapped in sections onto the individual subareas (C', C) of the area (LA), in order to be compared to individual travel times or radio cell travel times determined from the individual data.

11. Method according to claim 8, **characterized in that** only the individual data from the specific mobile radio units whose individual travel time matches the collective travel time are used to localize the detected traffic congestion.

12. Method according to any one of the preceding claims, **characterized in that** an allocation, in particular a sequence, of subareas (C', C) that correspond to a course of the traffic route is determined by analysis of the collective and individual data for the at least one flow of traffic within the area (LA).

13. Method according to claim 10, **characterized in that** the allocation or sequence of subareas (C', C) takes place solely on the basis of the statistical analysis of the collective and individual data, with no geographic assignment of the subareas to a map.

14. Method according to any one of the preceding claims, **characterized in that** the analysis of the individual data is supplemented by additional data from a stationary traffic observation station.

15. Method according to any one of the preceding claims, **characterized in that** the analysis of the individual data is supplemented by additional data or information on the transmission and/or reception strength of mobile radio signals.

16. System for generating traffic information and the localization thereof within a location area (LA) of a cellular mobile radio communications system in which mobile radio units are registered, wherein at least some of the mobile radio units are located in motor vehicles that move through the location area (LA) in at least one traffic flow along a traffic route, wherein the system has a central office with computing means that execute the following steps:
- by means of a first analysis of collective data that indicate entries into the area (LA) and exits from the area (LA) by registered mobile radio units for the at least one traffic flow, the computing means determine a collective travel time through the area (LA);
- by means of a second analysis of individual data that indicate the presence of individual active mobile radio units in subareas (C') of the location area (LA), the computing means apportion the collective travel time among the subareas (C, C') of the location area (LA) in order to determine therefrom a travel time for individual subareas (C') prevailing there;
- the computing means generate and localize the traffic information by means of a mapping of the individual subareas (C') onto a road network.

17. Central office for generating traffic information and the localization thereof within a location area (LA) of a cellular mobile radio communications system in which mobile radio units are registered, wherein at least some of the mobile radio units are located in motor vehicles that move through the location area (LA) in at least one traffic flow along a traffic route, wherein the central office has computing means that execute the following steps:
- by means of a first analysis of collective data that indicate entries into the area (LA) and exits from the area (LA) by registered mobile radio units for the at least one traffic flow, the computing means determine a collective travel time through the area (LA);
- by means of a second analysis of individual data that indicate the presence of individual active mobile radio units in subareas (C') of the location area (LA), the computing means apportion the collective travel time among the subareas (C, C') of the location area (LA) in order to determine therefrom a travel time for individual subareas (C') prevailing there;
- the computing means generate and localize the traffic information by means of a mapping of the individual subareas (C') onto a road network.

## Revendications

1. Procédé pour générer des informations sur la circulation et les localiser à l'intérieur d'une zone géographique (LA) d'un système de téléphonie mobile cellulaire, dans lequel des appareils de téléphonie mobile sont connectés, au moins une partie des appareils de téléphonie mobile se trouvant dans des véhicules automobiles qui se déplacent à travers la zone géographique (LA) en au moins un flot de circulation le long d'une voie de communication, le procédé comprenant les étapes suivantes :
- une durée de trajet collective à travers la zone (LA) est déterminée pour le au moins un flot de circulation au moyen d'une première analyse de données collectives qui signalent des entrées dans la zone (LA) et des sorties de la zone (LA) d'appareils de téléphonie mobile connectés ;
- la durée de trajet collective est répartie sur les sous-zones (C, C') de la zone géographique (LA) au moyen d'une deuxième analyse de données individuelles qui signalent la présence de différents appareils de téléphonie mobile activés dans des sous-zones (C') de la zone géographique (LA) afin de déterminer une durée de trajet prédominante pour différentes sous-zones (C') de celle-ci ;
- l'information sur la circulation est générée et localisée au moyen d'une représentation des différentes zones secondaires (C') sur un réseau routier.

2. Procédé selon la revendication 1, **caractérisé en ce que** la zone est une zone de couverture radio (LA) du système de téléphonie mobile cellulaire et **en ce que** les sous-zones sont constituées d'une seule ou de plusieurs cellules radio (C', C) de la zone de couverture radio (LA).

3. Procédé selon les revendications 1 ou 2, **caractérisé en ce qu'**une surveillance de la durée de trajet collective permet de détecter une augmentation de la durée de trajet en tant que perturbation de circulation dans la zone (LA).

4. Procédé selon la revendication 3, **caractérisé en ce que** la perturbation de circulation détectée est quantifiée au moyen d'une valeur de seuil pouvant être prédéterminée et/ou d'une durée pouvant être prédéterminée.

5. Procédé selon l'une des revendications précédentes, **caractérisé en ce que** les données collectives sont déterminées au moyen d'une analyse, en particulier statistique, de moments d'entrée et de sortie qui signalent l'entrée dans la zone (LA), respectivement la sortie de la zone (LA), des appareils de téléphonie mobile activés et non activés.

6. Procédé selon la revendication 3, **caractérisé en ce que** les données collectives sont obtenues au moyen d'une analyse de données d'actualisation pour la zone de couverture radio (LA) en ce qui concerne l'entrée et la sortie des appareils de téléphonie mobile activés et non activés.

7. Procédé selon l'une des revendications précédentes, **caractérisé en ce que** les données individuelles sont déterminées au moyen d'une analyse, en particulier statistique, de moments d'entrée et de sortie qui signalent l'entrée dans la sous-zone (C'), respectivement la sortie de la sous-zone (C'), des appareils de téléphonie mobile activés.

8. Procédé selon la revendication 5, **caractérisé en ce que** les données individuelles sont obtenues au moyen d'une analyse de données pour un changement radio entre les cellules radio (C', C) en ce qui concerne l'entrée et/ou la sortie des appareils de téléphonie mobile activés.

9. Procédé selon l'une des revendications précédentes, **caractérisé en ce qu'**une durée de trajet individuelle, respectivement une durée de trajet de cellule radio, est obtenue à partir des données individuelles pour la au moins une sous-zone, en particulier pour la au moins une cellule radio (C', C).

10. Procédé selon l'une des revendications précédentes, **caractérisé en ce que** les données individuelles sont liées aux données collectives en répartissant la durée de trajet collective et en la représentant par parties sur les différentes sous-zones (C', C) de la zone (LA) pour être comparées à des durées de trajet individuelles, respectivement durées de trajet de cellules radio, obtenues à partir des données individuelles.

11. Procédé selon la revendication 8, **caractérisé en ce que**, pour localiser la perturbation de circulation détectée, seules sont utilisées les données individuelles des appareils de téléphonie mobile dont la durée de trajet individuelle correspond à la durée de trajet collective.

12. Procédé selon l'une des revendications précédentes, **caractérisé en ce que** l'analyse des données collectives et individuelles pour le au moins un flot de circulation à l'intérieur de la zone (LA), permet de déterminer une affectation, en particulier une suite, de sous-zones (C', C) qui correspondent à un tracé de la voie de communication.

13. Procédé selon la revendication 10, **caractérisé en ce que** l'affectation, respectivement la suite, de sous-zones (C', C) est effectuée sans attribution géographique des sous-zones à une carte géographique, simplement à l'aide de l'analyse statistique des données collectives et individuelles.

14. Procédé selon l'une des revendications précédentes, **caractérisé en ce que** l'analyse des données individuelles est complétée par des données supplémentaires provenant d'une observation stationnaire de la circulation.

15. Procédé selon l'une des revendications précédentes, **caractérisé en ce que** l'analyse des données individuelles est complétée par des données ou des indications supplémentaires sur la puissance d'émission et/ou de réception de signaux de radio mobile.

16. Système pour générer l'information sur la circulation et la localiser à l'intérieur d'une zone géographique (LA) d'un système de téléphonie mobile cellulaire dans lequel des appareils de téléphonie mobile sont connectés, au moins une partie des appareils de téléphonie mobile se trouvant dans des véhicules qui se déplacent à travers la zone géographique (LA) en au moins un flot de circulation le long d'une voie de communication, le système comportant une centrale avec des moyens de calcul qui exécutent les étapes suivantes:
- les moyens de calcul déterminent, au moyen d'une première analyse de données collectives qui signalent des entrées dans la zone (LA) et des sorties de la zone (LA) d'appareils de téléphonie mobile connectés, une durée de trajet collective à travers la zone (LA) pour le au moins un flot de circulation ;
- les moyens de calcul répartissent, au moyen d'une deuxième analyse de données individuelles qui signalent la présence de différents appareils de téléphonie mobile activés dans des sous-zones (C') de la zone géographique (LA), la durée de trajet collective sur les sous-zones (C, C') de la zone géographique (LA) afin de déterminer une durée de trajet prédominante pour certaines sous-zones (C') de celle-ci ;
- les moyens de calcul génèrent et localisent l'information sur la circulation au moyen d'une représentation des différentes sous-zones (C') sur un réseau routier.

17. Centrale pour générer l'information sur la circulation et la localiser à l'intérieur d'une zone géographique (LA) d'un système de téléphonie mobile cellulaire dans lequel des appareils de téléphonie mobile sont connectés, au moins une partie des appareils de téléphonie mobile se trouvant dans des véhicules automobiles qui se déplacent à travers la zone géographique (LA) en au moins un flot de circulation le long d'une voie de communication, la centrale comportant des moyens de calcul qui exécutent les étapes suivantes:
- les moyens de calcul déterminent, au moyen d'une première analyse de données collectives qui signalent des entrées dans la zone (LA) et des sorties de la zone (LA) d'appareils de téléphonie mobile connectés, une durée de trajet collective à travers la zone (LA) pour le au moins un flot de circulation ;
- les moyens de calcul répartissent, au moyen d'une deuxième analyse de données individuelles qui signalent la présence de différents appareils de téléphonie mobile activés dans des sous-zones (C') de la zone géographique (LA), la durée de trajet collective sur les sous-zones (C, C') de la zone géographique (LA) afin de déterminer une durée de trajet prédominante pour différentes sous-zones (C') de celle-ci ;
- les moyens de calcul génèrent et localisent l'information sur la circulation au moyen d'une représentation des différentes sous-zones (C') sur un réseau routier.
